# EUROPÄISCHE PATENTSCHRIFT

(11) **EP 1 915 918 B1**
(45) Veröffentlichungstag und Bekanntmachung des Hinweises auf die Patenterteilung: **16.01.2013**
(21) Anmeldenummer: 06022486.2
(22) Anmeldetag: 27.10.2006
(51) Int. Cl.: A44B 18/00, A61F 13/62

(54) **Verbunde mit als Teil von Klettverschlüssen geeigneter Oberfläche und ihre Herstellung**
Composites comprising a component suitable as an element of a surface fastener and manufacturing process thereof
Produits composites ayant une surface apte à former une partie d'une fermeture à scratch et leur procédé de fabrication

(43) Veröffentlichungstag der Anmeldung: 30.04.2008
(73) Patentinhaber: RKW SE, 67227 Frankenthal (DE)
(72) Erfinder: Börmann, Ludwig, 83547 Babensham (DE); Schreiner, Günter, 83530 Schnaitsee (DE)
(74) Vertreter: Patentanwälte Zellentin & Partner

(56) Entgegenhaltungen:
- EP-A1- 0 289 198
- WO-A-99/14045
- WO-A2-97/23348
- US-A- 3 577 607
- US-A1- 2006 083 893

## Beschreibung

Die vorliegende Erfindung betrifft ein Verfahren zur Herstellung von Verbunden aus einem Vlies und zumindest einer weiteren Lage, wobei das Vlies zumindest in Teilbereichen eine Oberfläche aufweist, welche sich als Teil von Klettverschlussvorrichtungen eignet, die hergestellten Verbunde sowie ihre Verwendung als Schlingenkomponente in Klettverschlussvorrichtungen.

Wieder befestigbare Klettverschlussvorrichtungen sind im Bekleidungssektor, in absorbierenden Einwegartikeln und dergleichen weit verbreitet. Solche Vorrichtungen werden verwendet, wenn es wünschenswert ist, mehrfach zu öffnende und wiederverschließbare Verbindungen zwischen zwei oder mehreren Artikeln oder zwischen mehreren Oberflächen des gleichen Artikels zu erzeugen.

Eine gegenwärtig weit verbreitete Art Klettverschlussvorrichtungen, welche eine mechanische Verhakung nutzen, um eine wieder befestigbare Bindung zu erzeugen, wird unter der Marke "VELCRO" verkauft. Die Befestigungseinrichtungen VELCRO werden z.B. in US 2,717,437; US 3,009,235; US 3,266,113; US 3,550,837; US 4,169,303, und US 4,984,339 beschrieben. Befestiger des VELCRO-Typs nutzen im allgemeinen zwei Komponenten, nämlich eine männliche und eine weibliche Komponente. Die männliche Komponente wird häufig als Haken- und die weibliche Komponente als Schlingenkomponente bezeichnet. Die männliche Komponente enthält im wesentlichen eine Mehrzahl von elastischen, nach oben stehenden, haken- oder schlingenförmigen Elementen. Die weibliche Komponente besteht im allgemeinen aus einer Textilware mit einer Mehrzahl von nach oben stehenden Schlingen. Wenn die männliche Komponente und die weibliche Komponente zusammen gepresst werden, um die Befestigungseinrichtung zu schließen, verhaken sich die Haken in den Schlingen und bilden eine Mehrzahl mechanischer Bindungen zwischen den Haken- und Schlingenkomponenten. Diese Haken- und schlingenförmigen mechanischen Befestigungseinrichtungen haben sich als besonders nützlich bei absorbierenden Einwegartikeln, wie Einwegwindeln, Erwachsenen-Inkontinenzwäsche, Frauen-Hygienewäsche, Trainingshöschen und dergleichen, herausgestellt. Im Bereich von absorbierenden Einwegartikeln, insbesondere Windeln, werden solche Klettverschlussvorrichtungen z.B. in WO 96/22065, EP 719 533, EP 721 770 und WO 95/25496 beschrieben.

Die Verwendung bestehender wieder befestigbarer haken- und schlingenförmiger Befestigungseinrichtungen an absorbierenden Einwegartikeln war jedoch aufgrund der Kosten der Befestiger, relativ zu anderen Befestigertypen, beschränkt. Obwohl viele Versuche unternommen wurden, die Kosten von haken- und schlingenförmigen Befestigern, die zur Verwendung bei absorbierenden Einwegartikeln geeignet sind, zu reduzieren, blieb im allgemeinen der Nachteil, dass die Haken und Schlingen getrennt von der Herstellung des absorbierenden Einwegartikels hergestellt und während der Herstellung mit diesem verbunden werden mussten.

Zwar werden die Außenlagen von absorbierenden Einwegartikeln, insbesondere von Windeln, vorzugsweise mit einer Oberfläche hergestellt, die einem Textilgewebe in Aussehen und dem Gefühl bei der Berührung (touch) möglichst ähnlich ist. Dazu wird als Außenlage zumeist ein Verbund aus flüssigkeitsdichter Folie und einem Vlies als textil-ähnlicher äußerer Schicht vorgesehen. Trotz der Erfolge in dieser Hinsicht reichen aber die derzeitigen Oberflächen nicht aus, um die männliche Hakenkomponente einer Klettverschlussvorrichtung in dieser Oberfläche direkt zu verhaken. Die hierbei erzielten Haftkräfte sind zu gering.

Eine Ausbildung der gesamten äußeren Oberfläche mit dem hierzu erforderlichen Volumen des Vlieses verbietet sich bisher aus Kostengründen, da dies nur über Vliese mit höherer Dicke bzw. höherem Flächengewicht des Vlieses möglich ist. So kann beispielsweise ein Vlies durch entsprechende Auffaltung eine ausreichende Haftung bieten. Dazu werden z.B. in der EP 289 198 A1 und in der DE 103 52 958 A1 Verbunde aus Vlies und Folie gebildet, indem Vlies und Folie bereichsweise verbunden werden. Bei einem anschließenden Schrumpfen der Folie faltet sich das Vlies auf. Aus Kostengründen wird aber ein stetig verminderter Materialaufwand gefordert und die immer weiter reduzierten Materialstärken, typisch sind derzeit etwa 15 bis 30 g/m², erlauben es auch bei einer Vordehnung mittels Ring-Rolling nicht, eine als Schlingenkomponente geeignete Oberfläche zu adäquaten Kosten anzubieten. Im Vergleich zu entsprechend voluminöseren Vliesen aus den gängigen Polyolefinmaterialien sind die derzeit üblichen Polyestervliese als separat hergestellte und auf das Backsheet aufgebrachte Schlingenkomponente trotz des wesentlich höheren Materialpreises der Polyestervlies und dem zusätzlich notwendigen Befestigungsschritt preisgünstiger.

In WO 98/11855 wird als Lösung eine Schlingenkomponente vorgeschlagen, die einstückig mit der Außenlage (Backsheet) eines Einwegartikels ausgebildet ist. Dazu soll das Backsheet aus je einer inneren und einer äußeren Lage bestehen, die miteinander verbunden sind, wobei die äußere Lage aus Vlies zumindest teilweise durch eine Vordehnung ausreichend voluminös gemacht wird und vorzugsweise in dem Bereich, der später die Schlingenkomponente der Klettverschlussvorrichtung bildet (landing zone), nicht oder weniger mit der inneren Lage verbunden ist. Auch bei diesem Verfahren muss jedoch für eine ausreichende Schließkraft der Bereich der landing zone besonders hergestellt werden.

Die EP 1277 868 beschreibt einen Verbundstoff, bei dem ein Stapelfaservlies mit einer Folie in Form von regelmäßig wiederkehrenden Mustern verbunden wird, so dass ein Stapelfaservlies mit verbessertem Längs-/Querverhältnis der Höchstzugkraft resultiert, wobei die Folie das Vlies verstärken soll und in den nicht gebundenen Bereichen zerrissen wird. Die Problematik von Klettverschlüssen wird in dem Dokument nicht erwähnt.

Es besteht daher weiterhin die Aufgabe, die Herstellung von Klettverschlussvorrichtungen bei absorbierenden Einwegartikeln zu vereinfachen bzw. kostengünstiger zu ermöglichen.

Überraschend wurde nun gefunden, dass es möglich ist, durch thermische Behandlung von Laminaten aus einem üblichen Vlies und zumindest einer weiteren Lage, wobei das Vlies eine höhere Schmelztemperatur als die weitere Lage oder eine weitere Lage aufweist und diese Lage ein Schrumpfvermögen hat, dem Vlies eine Oberfläche zu verleihen, die sich als Schlingenkomponente von Klettverschlusseinrichtungen eignet.

Die obige Aufgabe wird daher gelöst durch ein Verfahren zur Heißtemperung von mehrschichtigen Verbunden aus einem Vlies mit einem Flächengewicht von maximal 30 g/m² und zumindest einer weiteren Lage, wobei das Vlies einen höheren Schmelzpunkt oder eine höher schmelzende Komponente aufweist, als zumindest eine der weiteren Lagen und diese Lage ein Schrumpfvermögen hat, und das Vlies mit der Lage laminiert ist, so dass das Vlies mit der Lage auf der gesamten Fläche verbunden ist, wobei der Verbund auf eine Temperatur oberhalb des Schmelzpunktes dieser Lage erwärmt wird, so dass diese Lage um 1 bis 10 % schrumpft, wobei das Vlies durch die Verminderung der Dimension des Verbundes in der Fläche an Höhe zunimmt und der Verbund auf Temperaturen unterhalb des Schmelzpunktes der Lage gekühlt wird.

Die Aufgabe wird weiterhin gelöst durch Verbunde aus zumindest einem Vlies aus Spinn- oder Stapelfaser auf Basis von Polypropylen, Polyethylen oder Mischungen von Polypropylen und Polyethylen und zumindest einer Lage aus einem niedriger schmelzenden Material, welche ein Schrumpfvermögen aufweist, wobei das Vlies mit der Lage auf der gesamten Fläche verbunden ist und das Vlies ein Flächengewicht von maximal 30 glm² und eine Oberfläche aufweist, welche sich als Schlingenkomponente von Klettverschlussvorrichtungen eignet, indem sie eine direkte Verhakung der männlichen Komponente einer Klettverschlussvorrichtung ermöglicht und die durch Erwärmen des Verbundes auf eine Temperatur oberhalb des Schmelzpunktes der Lage, so dass diese Lage um 1 bis 10 % schrumpft, wobei das Vlies durch die Verminderung der Dimension des Verbundes in der Fläche an Höhe zunimmt und Kühlen des Verbundes auf Temperaturen unterhalb des Schmelzpunktes der Lage erhältlich ist. Die Aufgabe wird auch durch Verwendung der Verbunde als Schlingenkomponente gelöst.

Durch die erfindungsgemäße Heißtemperung kann somit auf einfache und auch kostengünstige Weise eine Oberfläche z.B. als Außenlage von absorbierenden Einwegartikeln hergestellt werden, die eine direkte Verhakung der männlichen Komponente einer Klettverschlussvorrichtung ermöglicht.

Es ist von besonderem Vorteil, dass das Verfahren und auch die hergestellten Verbunde so kostengünstig sind, dass z.B. bei Windeln der Verbund das gesamte Backsheet bildet. So ist beim Schließen eine viel größere Variabilität möglich und nach dem Gebrauch kann z.B. eine Windel zusammengerollt und durch die Klettverschlüsse in dieser Lage fixiert werden.

Erstaunlicherweise werden bei einer Temperung oberhalb des Schmelztemperatur der schrumpffähigen Lage ausreichend voluminöse Oberflächen des Vlieses erhalten, während die an sich bekannte Temperung unterhalb der Schmelztemperatur nicht zu ausreichenden Haftkräften führt. Die Haftkräfte, bestimmt als Hakenscherkräfte wie im Beispielteil der vorliegenden Anmeldung beschrieben, vor der Temperung liegen für die verwendeten Vliese mit Flächengewichten von maximal 30 g/m² selbst bei speziell auf Vliese optimierten Hakenkomponenten typischerweise bei einigen N/cm, z.B. bei 2 bis 4 N/cm. Nach dem erfindungsgemäßen Heißtempern werden Hakenfestigkeiten von mindestens 6 N/cm, vorzugsweise mindestens 8 N/cm und insbesondere mindestens 10 N/cm erreicht. In der Regel verdoppelt das Verfahren in etwa die Kräfte, vielfach werden sie nahezu verdreifacht. Mit dem erfindungsgemäßen Verfahren gelingt es demzufolge, die Oberfläche von Vliesen voluminöser zu machen und damit die Hakenscherkräfte um zumindest 50 %, vorzugsweise 100 % und häufig sogar 200 % oder mehr zu steigern. Erstmals kann daher ein herkömmliches Vlies, für das keine Haken mit ausreichender Festigkeit gefunden werden konnten, als Schlingenkomponente eingesetzt werden. Es versteht sich, dass wie bei allen Klettverschlussvorrichtungen die Hakenkomponente an die Schlingenkomponente angepasst sein muss. Für die Vliese der erfindungsgemäßen Verbunde sind beispielsweise die Haken MICROPLAST 65445-C 350µm der Fa. Binder brauchbar.

Der Schrumpf des Verbundes wird erfindungsgemäß auf 1 bis 10 %, insbesondere 2 bis 5 % (Länge/Länge) eingestellt. Dieser Schrumpf ist nur mit dem erfindungsgemäßen Verfahren erreichbar, bei Temperaturen selbst knapp unterhalb des Schmelzpunktes der schrumpffähigen Lage ergibt sich kein ausreichender Schrumpf. Das Flächengewicht des Vlieses erhöht sich bei der Heißtemperung nur um den geringen Betrag der Schrumpfung, z.B. von 15 bis 25 g/m² selbst bei 10 % Schrumpf nur auf 16,5 bis 27,5 g/m². Die Materialkosten steigen somit praktisch nicht bzw. nur unerheblich an.

Unter Schmelzpunkt oder Schmelztemperatur wird im Rahmen der vorliegenden Anmeldung im Hinblick auf die polymeren Materialien diejenige Temperatur verstanden, bei welcher der Schubmodul des Materials gegen null geht. Soweit es sich um Polymere mit kristallinen Anteilen oder um kristalline Polymere handelt, sind bei dieser Temperatur (auch) die kristallinen Bereiche geschmolzen.

In Bezug auf eine Lage, z.B. eine Folie, ist der Schmelzpunkt diejenige Temperatur, bei der die Lage insgesamt aufschmilzt. Sofern die Lage nicht nur aus einem Material besteht, kommt es nicht darauf an, dass sämtliche Komponenten für sich eine Schmelztemperatur bei oder unterhalb des Schmelzpunktes der Lage aufweisen, vielmehr entspricht der Schmelzpunkt der Lage regelmäßig der Schmelztemperatur der thermoplastischen Hauptkomponente. So weist z.B. eine Folie enthaltend 60 % Calciumcarbonat, 32 % eines Polymers mit einer Kristallitschmelztemperatur von 138 °C und 8 % eines Polymers mit einer Kristallitschmelztemperatur von 158 °C einen Schmelzpunkt von etwa 138 °C auf.

Als schrumpffähige Lage werden im Rahmen der Erfindung Folien bevorzugt, weil in der Regel wasserdichte Folien ohnehin Bestandteil des Verbundes sind, z.B. bei einem Einsatz als äußere Oberfläche bei absorbierenden Einwegartikeln (Backsheet) oder bei Schutzkleidung. Es ist aber durchaus denkbar, dass die Funktion Wasserdichtigkeit von der Funktion Schrumpfvermögen getrennt wird, so dass die schrumpffähige Lage ein Netz, Vlies oder eine andere flächige Struktur sein kann. Die Erfindung soll im Folgenden der Einfachheit halber anhand einer Folie als schrumpffähiger Lage beschrieben werden.

Wichtig ist im Rahmen der Erfindung, dass die äußere Oberfläche ein Vlies ist, welches direkt oder auch über Zwischenlagen mit einer weiteren Lage flächig verbunden ist, welche ein Schrumpfvermögen hat und eine niedrigere Schmelztemperatur als das Vlies. Nur mit einer solchen Anordnung ist durch Heißtempern oberhalb der Schmelztemperatur dieser Lage ein ausreichender Schrumpf des Verbundes erreichbar, der zugleich durch die flächige Verbindung des Vlieses mit der Lage das Vlies zwingt, an Höhe zuzunehmen.

Der mehrschichtige Verbund wird in an sich bekannter Weise hergestellt, z.B. durch Laminierung zumindest einer Ausgangsfolienbahn mit zumindest einer Ausgangsvliesbahn mittels Klebstoff oder vorzugsweise durch Laminierung einer über die Schmelztemperatur der oder einer der Folienbahnen erhitzen Ausgangsfolienbahn mit zumindest einer Ausgangsvliesbahn in einem gekühlten Walzenspalt gemäß DE 10 2004 042 405 (Thermolaminierung).

Es ist auch möglich, das Laminat durch Direktextrusion der Folie(n) auf das/die Vlies(e) herzustellen. Solche Verbunde werden vorzugsweise einem Reckschritt in zumindest einer Richtung unterworfen, um den erreichbaren Schrumpf bei der erfindungsgemäßen Heißtemperung zu vergrößern. Laminate, bei welchen die Folie durch Direktextrusion mit der/den restlichen Lage(n) verbunden wurde, werden daher geprägt, gereckt (Ring-Rolling oder MDO) oder vorzugsweise geprägt und gereckt.

Wesentlich ist, dass die Folie (Lage) mit der im Vergleich zu dem Vlies niedrigeren Schmelztemperatur auch ein ausreichendes Schrumpfvermögen aufweist. Dieses ist bei Folien in der Regel bereits durch die üblichen Herstellverfahren gegeben, bei denen während der Extrusion zumindest geringe Zugkräfte in Maschinen- oder in Maschinen- und Querrichtung auftreten. Sofern erwünscht kann das Schrumpfvermögen durch an sich bekannte Verfahren weiter erhöht werden. Erstaunlicherweise ist aber nicht das absolute Schrumpfvermögen alleine ausreichend, da selbst mittels MDO-Reckung sehr stark gereckte Folien bei flächiger Verbindung mit dem Vlies erst dann einen ausreichenden Schrumpf zeigen, wenn sie über ihre Schmelztemperatur erhitzt werden. Ohne sich auf diese Theorie festlegen zu wollen, werden offenbar erst bei Erreichen des schmelzeflüssigen Zustandes ausreichende Schrumpfkräfte erzeugt, die in der Lage sind das Vlies gewissermaßen aufzufalten und ihm damit das notwendige Volumen zu verleihen, das einen Eingriff der Hakenkomponente erst ermöglicht.

Im Verbund hat demgemäss eine Verbindung des Vlieses mit den weiteren Lagen auf der gesamten Fläche, wie dies bei der Kleberlaminierung oder der Thermolaminierung der Fall ist, die deswegen bevorzugt werden. Es besteht somit eine gleichmäßige Verbindung im Gegensatz zum Vorschlag des Standes der Technik, für den Bereich der Schlingenkomponente keine Verbindung herzustellen. Unter flächige Verbindung wird daher nicht nur eine Verbindung über die gesamte Fläche, wie bei der Direktextrusion sondern eine Verbindung, welche im wesentlichen über die Fläche gleichmäßig ist, verstanden. Beim Thermobonding ergibt sich zwangsläufig eine nur punktuelle Verbindung oder nur entlang der gewählten Linien. Dies ist bei der Kleberlamination wahlweise möglich, die sowohl über die gesamte Fläche als auch nur punktuell oder entlang gewählter Linienmuster erfolgt. Beim Thermolaminieren und der Direktextrusion erfolgt zwangsläufig eine im Hygienebereich bevorzugte Verbindung über die gesamte Fläche.

Der Verbund besteht erfindungsgemäß aus zumindest einem Vlies und zumindest einer weiteren Lage, vorzugsweise einer Folie. Es ist aber möglich, mehrere weitere Lagen, z.B. Folienlagen oder Vlieslagen vorzusehen. Dies kann insbesondere wünschenswert sein, wenn die verschiedenen Lagen dem Verbund unterschiedliche, mit einer einzigen Lage nicht erreichbare Eigenschaften z.B. hinsichtlich Festigkeit, Bedruckbarkeit, Haftung der Verbundlagen etc. verleihen sollen. Die Ausdrücke zumindest eine Lage, zumindest eine Folie und zumindest ein Vlies umfassen daher sowohl genau eine Lage bzw. Folie bzw. Vlies als auch mehrere, wie zwei, drei, vier oder eine noch höhere Anzahl Folien, Lagen oder Vliese.

Die Erfindung soll im Folgenden mit Bezug auf die bevorzugten nach DE 10 2004 042 40b hergestellten Verbunde aus Folie und Vlies näher beschrieben werden, das erfindungsgemäße Verfahren eignet sich aber genauso für Verbunde, die durch andere Laminierverfahren erhalten wurden.

Die Ausgangsfolienbahn als bevorzugte schrumpffähige Lage wird in an sich bekannter Weise hergestellt, z.B. durch Blasextrusion oder Cast-Verfahren. Die bei diesen Verfahren während der Extrusion in die Folie eingebrachten Dehnungen stellen bereits ein ausreichendes Schrumpfvermögen der Folie im erfindungsgemäßen Verfahren bereit. Eine zusätzliche Reckung ist nicht erforderlich, kann aber gewünschtenfalls in an sich bekannter Weise erfolgen.

Bei atmungsaktiven Folien wird die Atmungsaktivität überwiegend durch Zusatz eines feinteiligen Füllstoffs wie Calciumcarbonat (Kreide) erreicht, dessen sehr hohe Schmelztemperatur aber bei Zusätzen selbst von über 50 Gew.-% den Schmelzpunkt der Folie nicht wesentlich beeinflusst. So weist eine Folie aus einem Gemisch von 60 % Calciumcarbonat mit 40 % Polymer denselben Kristallitschmelzpunkt wie das Polymer auf.

Die gefüllten Polymermaterialien werden zu Precursorfolien extrudiert und einer Reckung unterworfen, wobei die Atmungsaktivität erzeugt wird. Es entstehen um die Kreidekörner (mittlere Partikelgröße typischerweise 0.8 - 3.0µm) feine Poren zur Erreichung der Atmungsaktivität mit einer maximal erlaubten Größe von ca. 1µm zur Beibehaltung der Flüssigkeitsdichtigkeit. Die Messung der Atmungsaktivität erfolgt z.B. nach ASTM E 398 (38°C, 90% relative Luftfeuchte, Messgerät LYSSY L 80 - 5000 Lyssy AG, CH). Je nach Größe der verwendeten Kreidekörner und Eindringtiefe des Ringrolling lassen sich Wasserdampfdurchlässigkeiten von 500 - 3500 g/m² in 24 h einstellen. Alternativ oder zusätzlich kann die Precursorfolie über eine monoaxiale MDO-Reckanlage in Maschinenrichtung gereckt werden. Dabei wird typischerweise 100% der Folienbahn mit einem Reckgrad von z.B. 1:1,5 bis 1:4,0 in Maschinenrichtung gereckt und damit die Atmungsaktivität erzeugt. Im Gegensatz zum partiellen Recken beim Ringrolling können beim MDO-Recken über hohe Reckgrade und der gesamten zur Verfügung stehenden Folienbahnfläche fürs Recken sehr hohe Atmungsaktivitäten erreicht werden. Durch Variation der Parameter Korngrößen des Füllstoffs Reckgrad und ggfs. Eindringtiefe beim Ringrolling lassen sich die Wasserdampfdurchlässigkeiten beeinflussen. Werte im Bereich von 500 - 5000 g/m² in 24h sind möglich Als Materialien für die Folie kommen im Prinzip alle thermoplastischen Polymere in Betracht. Hierzu ist eine Vielzahl von Handelsprodukten am Markt erhältlich. Vorzugsweise werden LDPE (Low Density Polyethylen), LLDPE (Linear Low Density Polyethylen), MDPE (Medium Density Polyethylen), HDPE (High Density Polyethylen) und verschiedene PP (Polypropylen) sowie Copolymerisate von Ethylen oder Propylen miteinander und mit anderen Comonomeren eingesetzt. Diese Polymere werden entweder in reiner Form oder als Polymergemische verwendet. Übliche Rezepturen für Hygienefolien sind z. B Gemische aus 10 bis 90 Gew.-% LDPE, 10 bis 90 Gew.-% LLDPE und 0 bis 50% MDPE, zum Beispiel ein Gemisch aus 80% LDPE, 20% LLDPE und anforderungsgerechten Pigmentierungen.

Handelsübliche Polymere für Hygienefolien besitzen die nachfolgend angegebenen Schmelzbereiche bzw. Kristallitschmelzpunkte:
LDPE = 112 bis 114 °C,
LLDPE = 119 bis 125 °C
MDPE = 125 bis 128 °C.
PP (Blockcopolymere) = 130 bis 163°C

Üblicherweise werden Hygienefolien eingefärbt, z. B. weiß mit Titandioxid. Hinzu kommen übliche Zusatzstoffe und Verarbeitungshilfsmittel, die teilweise Betriebsgeheimnis der Verarbeiter sind. Beispielhaft sei hier auf die schon erwähnten Füllstoffe, auf Stabilisatoren gegen UV-Strahlung, Wärme, Oxidation sowie auf Hydrophobier- oder Hydrophiliermittel als Zusätze verwiesen. Als Verarbeitungshilfsmittel sind beispielhaft Fluorelastomere zu nennen.

Weiterhin sind Ethylenvinylacetat (EVA), Ethylenacrylat (EEA), Ethylenethylacrylat (EEA), Ethylenacrylsäure (EAA), Ethylenmethylacrylat (EMA), Ethylenbutylacrylat (EBA), Polyester (PET), Polyamid (PA) z.B. Nylon, Ethylenvinylalkohole (EVOH), Polystyrol (PS), Polyurethan (PU) und thermoplastische Olefinelastomere als thermoplastische Polymermaterialien für die Folie geeignet.

Als Material der Ausgangsfolienbahn sind Polyolefine wie z.B. LDPE, LLDPE und PP bevorzugt. Besonders bevorzugt sind Mischungen dieser Polymere, wie beispielsweise Mischungen aus LDPE und LLDPE, Mischungen aus LDPE oder LLDPE und PP oder Mischungen von PE oder PP verschiedener Schmelzpunkte.

Auch die Ausgangsvliesbahn wird in an sich bekannter Weise hergestellt. Geeignet sind Spinn- und Kardenvliese, welche zumindest eine Rezepturkomponente auf Basis eines thermoplastischen Polymers enthalten und mittels Thermobonding verfestigt werden. Beim Thermobonding werden die Fasern durch einen beheizten Walzenspalt geführt, welcher aus einer glatten und einer strukturierten Walze, üblicherweise beide aus Stahl, besteht. An den erhabenen Strukturen der strukturierten Walze werden die Fasern verschmolzen, so dass sich die Ausgangsvliesbahn ergibt. Die Struktur kann aus Punkten oder Linien bestehen, im Rahmen der Erfindung haben sich Strukturen wie Linien in Form von Rauten, Rechtecken, Quadraten etc. als besonders günstig erwiesen. Die Vliese können Fasern aus PE, PP, PET, Rayon, Zellulose, PA und Mischungen dieser Fasern enthalten. Auch Bi- oder Multikomponentenfasem sind brauchbar. Besonders bevorzugt werden Vliese aus Spinn- oder Stapelfaser auf Basis von PP, PE oder PET, sowie Vliese aus Mischungen von PP und PE oder Mischungen von PET und PP oder PE. Im Hinblick auf die Verwendung als Schlingenkomponente werden bevorzugt Spinnvliese eingesetzt, insbesondere mit mindestens 50 % Fasern auf Basis thermoplastischer Polymere wie PE, PP, PET, PA, vorzugsweise PE und/oder PP. Auch die Ausgangsvliesbahnen können die an sich bekannten und üblichen Zusätze enthalten. Das Flächengewicht beträgt maximal 30 g/m², vorzugsweise maximal 25 g/m² und insbesondere maximal 20 g/m². Eine untere Grenze ist durch die notwendigen Hakenscherkräfte gegeben und hängt damit auch von der Anwendung ab. Bei absorbierenden Einwegartikein, insbesondere im Windelverschlussbereich, sollten die Kräfte zumindest 8 N/cm betragen. Hier ist derzeit ein Flächengewicht des Vlieses von mindestens 15 g/m² bevorzugt. Für andere Anwendungen können die Kräfte geringer sein, das Flächengewicht des Vlieses kann dann durchaus niedriger liegen, z.B. bei bis zu 10 g/m². Eine weitere Grenze stellt die Verarbeitbarkeit, d.h. die zur Laminierung notwendige Festigkeit des Vlieses, dar. Es versteht sich, dass das Vlies nicht so dünn sein darf, dass es nicht mehr in den üblichen Anlagen verarbeitet, z.B. laminiert werden kann. Es ist auch zu erwarten, dass die Hakenkomponenten noch weiter verbessert werden, so dass damit über das erfindungsgemäße Verfahren eine geeignete Oberfläche auch bei noch dünneren Vliesen erzielbar wird.

Bei dem Vlies brauchen im Falle von mehreren Materialkomponenten ebenfalls nicht alle Materialkomponenten einen Schmelzpunkt oberhalb der Temperatur des erfindungsgemäßen Heißtempems zu haben, es reicht, wenn zumindest eine Komponente einen höheren Schmelzpunkt hat, so dass die Integrität des Vlieses gewahrt bleibt. Es kann sogar vorteilhaft sein, wenn eine Materialkomponente des Vlieses eine geringere Schmelztemperatur aufweist, da hierdurch die Verbundhaftung der Laminate verbessert werden kann. Vorzugsweise weist das Vlies aber keine oder nur geringe Anteile, unter 30 %, vorzugsweise unter 20 % und insbesondere unter 10 %, an Komponenten auf, welche eine niedrigere Schmelztemperatur als die niedrigschmelzende Folie (Lage) haben.

Die Anzahl der Bahnen für die erfindungsgemäßen Verbunde ist nicht begrenzt, es können nicht nur Vliese mit Folien laminiert sein, sondern jede erdenkliche Kombination (z. B. Vlies/Vlies; Vlies/Folie/Vlies; etc.). Der Verbund kann demgemäss durchaus eine oder mehrere weitere Vlieslagen enthalten. Soweit diese als Vlies mit textiler Oberfläche vorliegen sollen, sollten sie ebenfalls eine höhere Schmelztemperatur haben als die schrumpffähige Lage, da ansonsten bei der Heißtemperung der weiche, textil-ähnliche Charakter verloren ginge. Soweit ein Vlies die schrumpffähige Lage bildet, muss es naturgemäß eine niedrigere Schmelztemperatur haben als das Vlies, dessen Oberfläche die Schlingenkomponente bildet.

Die Ausgangsbahnen können durch jedes bekannte Verfahren hergestellt worden sein müssen jedoch thermoplastische Anteile beinhalten. Wichtig ist, dass die Materialien aufeinander abgestimmt werden, indem die Kristallitschmelzpunkte weit genug auseinander liegen. Die Kristallitschmelztemperatur der Ausgangsfolienbahn bzw. der niedrigschmelzenden Komponente der Ausgangsfolienbahn sollte mindestens etwa 5 °C, vorzugsweise mindestens etwa 10°C und insbesondere mindestens etwa 20 °C unterhalb der Schmelztemperatur der Ausgangsvliesbahn bzw. unterhalb der Schmelztemperatur der hochschmelzenden Komponente der Ausgangsvüesbahn liegen

Für die bevorzugte thermische Laminierung und auch für die Direktextrusion müssen andererseits die Materialien soweit miteinander verträglich sind, dass eine Verbindung ermöglicht ist. Geeignete Materialkombinationen sind dem Fachmann bekannt bzw. können anhand einiger weniger orientierender Versuche ermittelt werden. Diese Beschränkung gilt naturgemäß für die Kleberlaminierung nicht in demselben Ausmaß. Zur Verbesserung der Verträglichkeit kann in der Ausgangsfolienbahn oder der Ausgangsvliesbahn oder in beiden eine niedrig schmelzende Komponente enthalten sein. Hierbei ist zu gewährleisten, dass zumindest eine Komponente der Ausgangsvliesbahn einen Schmelzpunkt oberhalb der Kristallitschmelztemperatur der Ausgangsfolienbahn bzw. der niedriger schmelzenden Komponente in der Ausgangsfolienbahn aufweist.

Zur Verbesserung der Materialverträglichkeit ist es auch möglich, zwei- oder mehrlagige Vliese einzusetzen, bei denen die im Laminat mit der Ausgangsfolienbahn in Kontakt befindliche Lage im Vergleich zu der/den weiteren Lagen aus einem niedriger schmelzenden Material besteht bzw. ein niedriger schmelzendes Material enthält.

Die Ausgangsfolienbahn wird bei dem bevorzugten Laminierverfahren gemäß DE 10 2004 042 405 gemeinsam mit der Ausgangsvliesbahn über einen vorzugsweise antihaft beschichten Heizzylinder erwärmt und anschließend durch einen gekühlten Walzenspalt geführt. Es kann natürlich auch mit mehreren Heizzyfindern oder anderen Erwärmungsmethoden wie z.B. Infrarotstrahler gearbeitet werden.

Der hergestellte Verbund wird dann erfindungsgemäß heiß-getempert. Dies kann entweder direkt im Anschluss an seine Herstellung (in-line) oder unabhängig davon zu einem späteren Zeitpunkt (off-line) erfolgen. Die erfindungsgemäße Heißtemperung (hot-annealing) erfolgt auf an sich für die Temperung bekannte Weise, jedoch ist die Temperatur oberhalb der Schmelztemperatur der niedrigschmelzenden Folie des Verbundes einzustellen.

Das Prozessfenster der Erwärmung ist bei der minimalen Temperatur durch den zwingend erforderlichen schmelzeflüssigen Zustand der Folie gegeben. Nach oben wird die Erwärmung durch den Kristallitschmelzpunkt der Vliesbahn(en) begrenzt, sowie bei atmungsaktiven Folien ggfs. zusätzlich durch einen bei zu hohen Temperaturen auftretenden Verlust der Atmungsaktivität der Folie. Wird in den Kristafiitschmeizpunkt der Vliesbahn hinein erwärmt, geht die gute Weichheit des Laminates verloren und es entsteht die Gefahr der Bildung von Löchern (pinholes) in dem Verbund. Bei atmungsaktiven Folien sollte die Heißtemperung bei solchen Temperaturen erfolgen, dass die Schmelze noch zu zähflüssig ist, um die Poren zu verschließen. Alternativ kann aber die Atmungsaktivität auch erst nach dem Heißtempern erzeugt werden, indem der Verbund nach diesem Schritt z. B. noch einem Ring-Rolüng unterworfen wird.

Die erfindungsgemäßen Verbunde können auch bedruckt sein. So kann die Folie z.B. bei der bevorzugten Herstellung des Verbundes nach dem Extrusionsvorgang und vor dem Laminiervorgang bedruckt werden. Dies ermöglicht den Druck auf die Folienseite die im späteren Laminat mit dem Vlies abgedeckt wird. Damit erreicht man eine sehr gute Druckqualität, weil auf die glatte Folienbahn gedruckt werden kann. Das direkt darüberliegende Vlies im fertigen Laminat beeinflusst das Druckbild nur unerheblich, verhindert aber den Druckfarbenabrieb im Endprodukt. Beispielsweise kann bei Verwendung der erfindungsgemäß bedruckten Laminate als Backsheets für Babywindeln keine Verschmutzung des Umfeldes durch Abrieb der Druckfarbe auftreten, da diese durch das Vlies abgedeckt ist. Im Hinblick auf atmungsaktive Laminate erfolgt die Reckung zur Schaffung der Atmungsaktivität bei füllstoffhaltigen Folien bevorzugt ebenfalls vor dem Bedrucken und dem Laminiervorgang. Hierdurch wird eine Verzerrung der Druckmotive beim Recken vermieden.

Im Falle der Direktextrusion - die schmelzeflüssige Folienbahn wird direkt nach der Breitschlitzdüse mit der Vliesbahn verbunden - kann entweder direkt auf die Vliesseite (= Außenseite der verschiedenen Endprodukte (z.B. Windeln)) gedruckt werden, oder auf die Folienseite im sogenannten Konterdruckverfahren.

Die Heißtemperung erfolgt vorzugsweise indem der Verbund mittels einer oder mehrerer Heizwalzen oder alternativ z.B. mittels IR-Strahlung, soweit erwärmt wird, dass die Folie, d.h. zumindest die niedrigschmelzende Rohstoffkomponente, den schmelzeflüssigen Zustand erreicht. Nach erfolgter Erwärmung läuft der Verbund direkt auf langsamer laufende Kühlwalzen, so dass eine schockartige Kühlung auftritt und durch die 1 - 10 % geringere Umfangsgeschwindigkeit ein Schrumpf zwischen Heizelement und Kühlung möglich ist. Der Schrumpf sollte im Bereich von 1 - 10 % (Länge/Länge) in Maschinenrichtung liegen. Quer dazu erfolgt je nach Herstellung und Vorbehandlung der Folie ebenfalls ein Schrumpfen (Neck In). Bei Blasfolien liegt der Querschrumpf typischerweise ebenfalls bei 1 bis 10 %, bei Cast-Folien ist er typischerweise geringer. Die Temperatur der Kühlwalzen beträgt vorzugsweise 10 - 30°C, so dass die Kühlung des Verbundes auf unterhalb der Schmelztemperatur der Folie sehr schnell, z.B. innerhalb von 0,05 bis 1 Sekunde, vorzugsweise innerhalb von 0,1 bis 0,5 Sekunden, erfolgt.

In einer weiteren bevorzugten Ausführungsform wird der Verbund, vorzugsweise vor der erfindungsgemäßen Heißtemperung, einem Ringrolling quer zur Bahn unterzogen. Dieses Recken in Querrichtung (CD) reduziert einerseits das Flächengewicht des Laminates, verbreitert die Bahn in Querrichtung und erhöht die Weichheit des Endproduktes. Diese beschriebenen Eigenschaftsveränderungen können leicht durch die verwendete Geometrie und den Eingriffsgrad der Ringrollingwalzen beeinflusst werden. Selbstverständlich können die Laminate auch einem Ringrolling in Maschinenrichtung (MD) oder in Quer- und Maschinenrichtung (CD+MD) unterzogen werden. Durch die gute Steuerungsmöglichkeit der Eindringtiefe der Folienbahn in die Vliesbahn über den Heizzylinder bei dem bevorzugten thermischen Laminieren ist Lochbildung bzw. Pinholes beim Reckvorgang leicht zu vermeiden. Das Ring-Rolling kann auch nach dem Heißtempern erfolgen.

In noch einer bevorzugten Ausführungsform, die besonders für hochatmungsaktive Verbunde Anwendung findet, erfolgt anstelle des Ringrolling oder zusätzlich eine Reckung in Maschinenrichtung, eine sogenannte MDO-Reckung. Hierdurch lassen sich wegen der im Vergleich zum Ringrolling stärkeren Reckung mehr Mikrorisse erzeugen, die Atmungsaktivität steigt. Diese Reckung kann vor oder nach dem Laminieren, vor oder nach dem erfindungsgemäßen Heißtempern erfolgen. Vorzugsweise erfolgt die MDO-Reckung vor dem Laminieren und vor dem Heißtempern. In diesem Fall ist das Temperaturfenster beim Heißtempern auch durch die Temperatur begrenzt, bei der sich die Mikrorisse in der Folie, welche die Atmungsaktivität bereitstellen, wieder schließen.

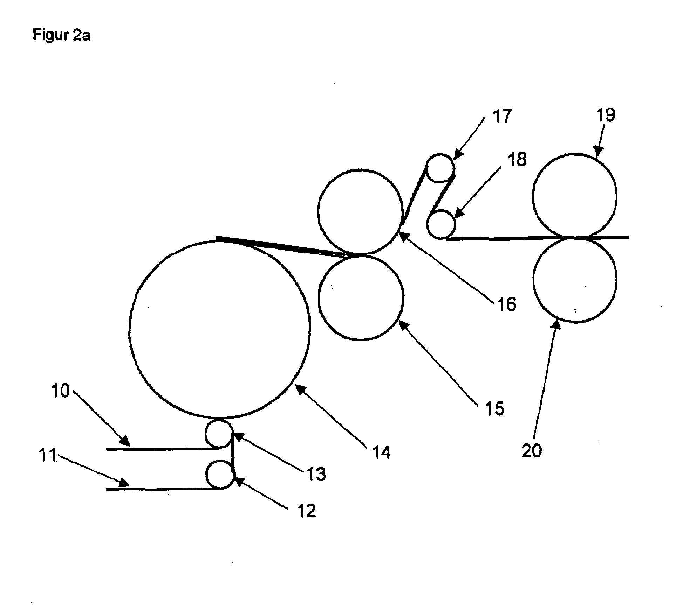

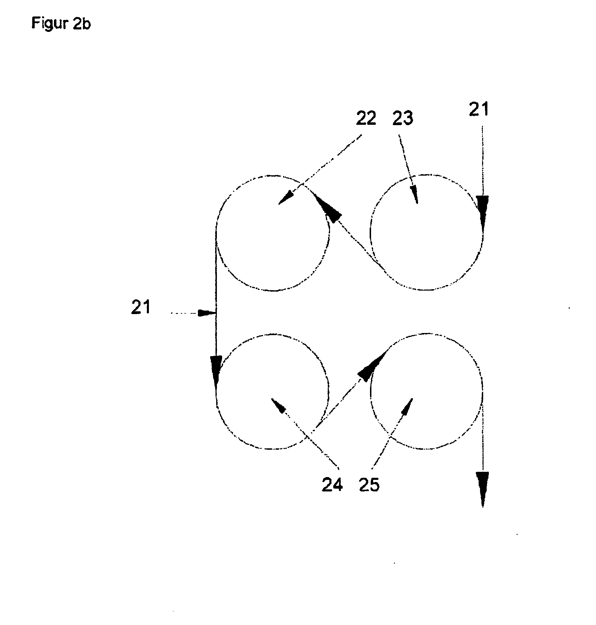

In Figur 2a und 2b sind Ausführungsformen des Thermolaminierverfahren und der erfindungsgemäßen Heißtemperung schematisch dargestellt. Eine Ausgangsvliesbahn 10 wird über die Umlenkwalze 12 und eine Ausgangsfolienbahn 11 über die Umlenk- und Anpresswalze 13 auf einen Heizzylinder 14 geführt. Dort werden beide Bahnen miteinander auf eine Temperatur oberhalb des Kristallitschmelzpunktes der Ausgangsfolienbahn und unterhalb des Kristallitschmelzpunktes der Ausgangsvliesbahn erwärmt. Die Vliesbahn liegt dabei an dem Zylinder 14 an. Anschließend wird der auf dem Heizzylinder 14 gebildete Verbund in dem Prägewerk aus Prägewalze 15 und Gummiwalze 16 fixiert und gekühlt. Über die Umlenkwalzen 17 und 18 wird der Verbund 21 einer Reckung zugeführt, die durch die Ringrollingwalzen 19 und 20 in Querrichtung erfolgt. Der so hergestellte Verbund 21 wird dann der in Figur 2b gezeigten Heißtemperung zugeführt. Der Verbund 21 läuft hierbei über zwei Heizwalzen 22 und 23, wobei er auf eine Temperatur oberhalb der Schmelztemperatur der Folie 11, aber unterhalb der Schmelztemperatur des Vlieses 10 erwärmt wird. Von der Heizwalze 23 läuft der Verbund 21 auf die beiden Kühlwalzen 24 und 25. Diese haben eine um so viel geringere Umfangsgeschwindigkeit als die Heizwalzen, wie der gewünschte Schrumpf in Maschinenrichtung beträgt, also z.B. um 5% wenn der Schrumpf 5 % betragen soll. Der Schrumpf in Querrichtung ist mit der gezeigten Anordnung nur im Rahmen der Temperatureinstellung steuerbar. Er hängt vor allem von der Herstellung der Folie (Blasfolien weisen einen größeren Querschrumpf auf als Cast-Folien) sowie von einer eventuellen Vorbehandlung der Folie (z.B. Ring-Rolling) ab. Bei gleicher Folie lassen sich in diesem Rahmen durch höhere Temperaturen bei der erfindungsgemäßen Heißtemperung höhere Querschrumpfwerte erzielen.

Die folgenden Beispiele sollen die Erfindung veranschaulichen, ohne sie jedoch darauf zu beschränken. Soweit nichts anderes angegeben ist beziehen sich Angaben von % und Teilen im Rahmen von Materialgemischen auf das Gewicht.

### Beispiele

### Messung der Hakenscherkräfte

Es wird die Kraft gemessen, die zum geraden Abzug (Winkel 0°) einer Hakenkomponente von der zu prüfenden Schlingenkomponente notwendig ist. Die Komponenten werden zunächst 24 h bei 23 °C und 50 % relativer Luftfeuchte gelagert. Die zu testende Schlingenkomponente wird dann auf der 50 mm x 150 mm großen Stahlplatte eines Zugprüfgerätes nach EN ISO 527-1 (April 1996) mit einer Klemmbackenbreite von 60 mm mittels doppeiseitigem Klebeband ganzflächig aufgeklebt und mit einer Rolle mit glatter Oberfläche und einem Gewicht von 2 kg zweimal angerollt.

Die Hakenkomponente, Abmessung: 25 mm x 20 mm, wird aufgelegt, Abstand von der Stahlplattenkante: längs 75 mm und quer 12,5 mm. Die Hakenkomponente wird mit 2 Lagen aufeinander geklebtem einseitigem Klebeband verlängert, indem dieses aufgeklebt wird. Anschließend wird die Hakenkomponente viermal mit einer Rolle mit glatter Oberfläche und einem Gewicht von 3,7 bzw. 4,4 kg angerollt. Das unterschiedliche Gewicht der beiden verwendeten Rollen hatte keinen Einfluss auf die Messwerte.

Die Stahlplatte wurde dann mittig zentriert in die untere Klemmbacke der Zugprüfeinrichtung eingespannt und die Verlängerung der Hakenkomponente mittig zentriert in die obere Klemmbacke, Einspannlänge zwischen den Klemmbacken: 150 mm. Bei einer Prüfgeschwindigkeit von 300 mm/min und einer Vorkraft von 0,2 N wurde dann der Weg bis zur Ablösung der Hakenkomponente von der Schlingenkomponente ermittelt. Es sind jeweils Mittelwerte aus mindestens 5 Messungen zu bestimmen.

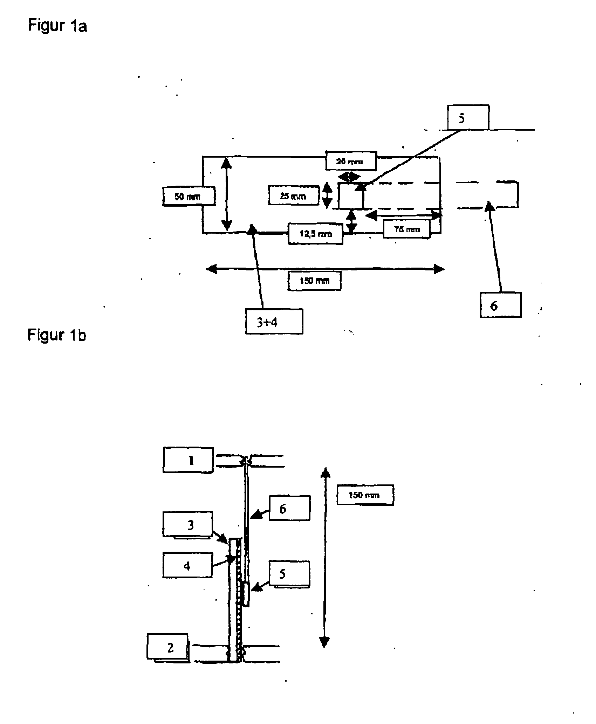

Die Probenanordnung und die Messanordnung sind in Figur 1a und b schematisch dargestellt. Figur 1 a zeigt die relative Anordnung von Schlingenkomponente 4 und Hakenkomponente 5 mit dem einseitigen Klebeband 6. In Figur 1b ist die Messanordnung schematisch gezeigt. Die Stahlplatte 3 mit der darauf mittels Klebeband befestigten Schlingenkomponente 4 ist in die untere Klemmbacke 2 eingespannt und die Hakenkomponente 5 ist über das Klebeband 6 in die obere Klemmbacke 1 eingespannt.

Als Haken wurde ein MICROPLAST 65445-C 350µm der Fa. Binder verwendet.

### Beispiel 1: Vlies-Folienlaminat (nicht atmungsaktiv)

Eine Ausgangsfolienbahn aus 30 % Polypropylen (Schmelzpunkt 137 -143°C), 60 % LDPE und 10 % LLDPE wird in 14 g/m² blasextrudiert. Die Ausgangsfolienbahn wird anschließend gemeinsam mit einer auf Polypropylen basierenden Ausgartgsvtiesbahn (20 g/m², BBA Trilobal) einer Vorrichtung, wie sie in Figur 2a schematisch dargestellt ist, zugeführt und bei 137 bis 143 °C zu einem Verbund laminiert. Dieses Laminat wird anschließend einem Ringrolling unterzogen und dann in einer Vorrichtung, wie sie in Figur 2b schematisch gezeigt ist erfindungsgemäß getempert und geschrumpft. Dabei wird das Laminat wiederum auf 137 bis 143°C erwärmt. Die Kühlwalzen, Temperatur 10 bis 30 °C, haben dabei eine um 3,5 % geringere Umfangsgeschwindigkeit als die Heizwalzen so, dass ein Schrumpf in Maschinenrichtung um 3,5 % erfolgt. Der Schrumpf in Querrichtung betrug 3 % Das Laminat zeigte eine Hakensscherkraft von 9,5 N/cm, was deutlich oberhalb der für Hygieneprodukte bevorzugten mindestens 8 N/cm liegt.

### Beispiel 2: Vlies-Folienlaminat (atmungsaktiv)

Eine Ausgangsfolienbahn (Precursor-Film) wird blasextrudiert. Die Rezeptur der Folienbahn besteht aus 80 % Polypropylen-Compound (Schmelzpunkt 137 - 143 °C) und 20 % PP-Compound (Schmelzpunkt 158 - 162 °C), wobei die Compounds jeweils aus einer Abmischung Rohstoff plus 60 % CaCO₃ (Kreide) bestehen. Die Ausgangsfolienbahn wird anschließend gemeinsam mit einer auf Polypropylen basierenden Ausgangsvliesbahn (20 g/m²) einer Vorrichtung, wie sie in Figur 2a schematisch dargestellt ist zugeführt und bei 137 - 143 °C oberhalb des Schmelzpunktes der niedrig schmelzenden PP Komponente laminiert. Der Verbund wird dann einem Ringrolling quer zur Materialbahn unterzogen. Bei diesem Reckvorgang wird die Atmungsaktivität erzeugt. Die Messung nach ASTM E 398 (38°C, 90% relative Luftfeuchte, Messgerät LYSSY L 80 - 5000 Lyssy AG, CH) ergab eine Wasserdampfdurchlässigkeit von 2200 - 2500 g/m² in 24h.

Dieses Laminat wird anschließend in einer Vorrichtung, wie sie in Figur 2b schematisch gezeigt ist, erfindungsgemäß getempert und geschrumpft. Dabei wird das Laminat wiederum auf 137 bis 143°C erwärmt. Die Kühlwalzen, Temperatur 10 bis 30 °C, haben dabei eine um 4 % geringere Umfangsgeschwindigkeit als die Heizwalzen so, dass ein Schrumpf in Maschinenrichtung um 4 % erfolgt. Der Schrumpf in Querrichtung betrug 3 %. Das Laminat zeigte eine Hakensscherkraft von 9,5 N/cm. Bei einem Tempern bei 135 °C und darunter wurde keine nennenswerte Steigerung der Hakenscherfestigkeit gefunden, die Hakenscherkraft war mit 3,8 N/cm bei unter 135 °C und mit 5,2 N/cm bei 135 °C jeweils noch zu gering.

### Beispiel 3: Vties-Fotienlaminat (hoch atmungsaktiv)

Zunächst wird eine Ausgangsfolienbahn (Precursor-Film) blasextrudiert. Die Rezeptur der Folienbahn besteht aus 70 % niedrigschmelzendem Polypropylen-Compound (Schmelzpunkt ca. 137 - 143 °C) und 30 % hochschmelzendem Polypropylen-Compound (Schmelzpunkt 158-164 °C). Die Compounds bestehen jeweils aus einer Abmischung Rohstoff plus 60 % CaCO₃ (Kreide). Nach der Blasextrusion der sog. Precursorfolie wird die Folie über eine monoaxiale MDO-Reckanlage in Maschinenrichtung gereckt. Dabei wird 100% der Folienbahn mit einem Reckgrad von 1:1,5 bis 1:4,0 in Maschinenrichtung gereckt und damit die Atmungsaktivität erzeugt.

Die atmungsaktive Folienbahn wird anschließend gemeinsam mit einer auf Polypropylen basierenden Ausgangsvliesbahn (20 g/m²) in einer Vorrichtung, wie sie in Figur 2a gezeigt ist, bei 130 bis 140 °C laminiert. Das Rezept der dreilagigen Ausgangsvliesbahn besteht in zwei Vlieslagen aus einem hochschmelzenden Polypropylen (Kristallitschmelzpunkt ca. 150 - 165 °C). Die dritte Vlieslage (=Außenlage = Laminierseite zur Folie) wurde ähnlich der Folienbahn mit einem Polypropylen mit Schmelzpunkt ca. 130 °C ausgeführt. Nach dem Laminieren wurde eine Wasserdampfdurchlässigkeit von 2000 - 3500 g/m² in 24 h gemessen.

Ein zusätzliches Ringrolling in CD erhöht die Weichheit und Wasserdampfdurchlässigkeit noch weiter.

Dieses Laminat wird anschließend in einer Vorrichtung, wie sie in Figur 2b schematisch gezeigt ist erfindungsgemäß getempert und geschrumpft. Dabei wird das Laminat wiederum auf 137 bis 140 °C erwärmt. Die Kühlwalzen, Temperatur 10 bis 30 °C, haben dabei eine um 5 % geringere Umfangsgeschwindigkeit als die Heizwalzen so, dass ein Schrumpf in Maschinenrichtung um 5 % erfolgt. Der Schrumpf in Querrichtung betrug 3 %. Das Laminat zeigte eine Hakensscherkraft von 9,0 N/cm.

### Beispiel 4

Für zwei verschiedene Vliese, Atex Axar (20 g/m², Thermobonding mit einem Punktmuster) und BBA Trilobal (20 g/m², Thermobonding mit einem Rautenmuster) wurde die Änderung der Hakenscherkraft durch das erfindungsgemäße Heißtempern bestimmt. Die Vliese wurden zum einen mit einer atmungsaktiven Folie, Flächengewicht 21 g/m² thermolaminiert wie in Beispiel 2 beschrieben und in CD einem Ringrolling unterworfen und zusätzlich das Vlies BBA Trilobal mit derselben Folie kleberlaminiert, ohne Ringrolling. Die gemessenen Hakenscherkräfte vor und nach dem Heißtempern fasst Tabelle 1 zusammen.

**Tabelle 1**

| Vliestyp | Hakenscherkraft vor dem Tempern | Hakenscherkraft nach dem Tempern |
|---|---|---|
| Atex Axar, thermolaminiert | 3,0 N/cm | 6,0 N/cm |
| BBA Trilobal, thermolaminiert | 3,8 N/cm | 9,5 N/cm |
| BBA Trilobal, kleberlaminiert | 5,9 N/cm | 10,2 N/cm |

Man erkennt, dass mit dem erfindungsgemäßen Heißtempern Laminate mit deutlich erhöhter, d.h. verdoppelter bis verdreifachter Hakenscherkraft erhalten werden. Selbst das speziell voluminös hergestellte Vlies BBA Trilobal zeigt bei der das Volumen besonders wenig vermindernden Kleberlaminierung Hakenscherfestigkeiten die noch nicht ausreichen. Mit dem nicht besonders optimierten Vlies Atex Axar kann erfindungsgemäß auch bei der Thermolamination eine bereits ausreichende Hakenfestigkeit von 6 N/cm erreicht werden.

Somit können einfach und kostengünstig neuartige Verbunde erhalten werden, welche direkt als Schlingenkomponente für Klettverschlussvorrichtungen geeignet sind. Diese können insbesondere in Windeln als Backsheet verwendet werden, wobei gleichzeitig eine erwünschte Optik und Haptik ähnlich textilem Gewebe erhalten wird und dazu eine direkte Verhakung der Hakenkomponente von Klettverschlussvorrichtungen möglich ist.

Außerdem eignen sich die erfindungsgemäßen Verbunde auch in anderen Anwendungsbereichen, in denen Verbunde aus wasserdichten Folien und textilimitierenden Vliesen herkömmliche gewebte Textilien ersetzen, wie bei Schutzbekleidung, Abdeckungen etc. In vorteilhafter Weise können diese Artikel im Ganzen aus den Verbunden hergestellt sein, da die Materialkosten der erfindungsgemäßen Verbunde nicht oder kaum höher sind, als die der bekannte, jedoch als Schlingenkomponente ungeeigneten Verbunde des Standes der Technik.

### Bezugszeichenliste

- 1: obere Klemmbacke
- 2: untere Klemmbacke
- 3: Stahlplatte
- 4: Schlingenkomponente
- 5: Hakenkomponente
- 6: einseitiges Klebeband

- 10: Ausgangsvliesbahn, Vlies
- 11: Ausgangsfolienbahn, Folie
- 12: Umlenkwalze
- 13: Umlenk- und Anpresswalze
- 14: Heizzylinder
- 15: Prägewalze
- 16: Gummiwalze
- 17: Umlenkwalze
- 18: Umlenkwalze
- 19: Ringrollingwalze
- 20: Ringrollingwalze
- 21: Verbund
- 22: Heizwalze
- 23: Heizwalze
- 24: Kühlwalze
- 25: Kühlwalze

## Patentansprüche

1. Verfahren zur Herstellung von Verbunden (21) mit einer Oberfläche, welche sich als Schlingenkomponente von Klettverschlussvorrichtungen eignet, indem sie eine direkte Verhakung der männlichen Komponente einer Klettverschlussvorrichtung ermöglicht, aus einem Vlies (10) mit einem Flächengewicht von maximal 30 g/m² und zumindest einer weiteren Lage (11), wobei die weitere Lage (11) eine niedrigere Schmelztemperatur aufweist, als das Vlies (10) und die Lage (11) ein Schrumpfvermögen hat, wobei das Vlies (10) mit der Lage (11) laminiert wird, **dadurch gekennzeichnet dass** das Vlies (10) mit der Lage (11) auf der gesamten Fläche verbunden ist, wobei der Verbund (21) einer Heißtemperung unterworfen wird, indem der Verbund (21) auf eine Temperatur oberhalb des Schmelzpunktes der Lage (11) erwärmt wird, man diese um 1 bis 10 % schrumpfen lässt, so dass das Vlies (10) durch die Verminderung der Dimension in der Fläche an Höhe zunimmt und der Verbund (21) auf Temperaturen unterhalb des Schmelzpunktes der Lage (11) gekühlt wird.

2. Verfahren gemäß Anspruch 1, **dadurch gekennzeichnet, dass** die Kühlung mittels Kühlwalzen (15, 16) erfolgt, deren Umfangsgeschwindigkeit um so viel langsamer als die der Heizwalzen (14) eingestellt wird, wie der Verbund (21) schrumpfen soll.

3. Verfahren gemäß Anspruch 1 oder 2, **dadurch gekennzeichnet, dass** das Vlies (10) mit der weiteren Lage (11) mittels Kleberlamination oder Thermolamination laminiert wird.

4. Verfahren gemäß einem der Ansprüche 1 bis 3, **dadurch gekennzeichnet, dass** der Schrumpf auf 2 bis 5 % eingestellt wird.

5. Verfahren gemäß einem der Ansprüche 1 bis 4, **dadurch gekennzeichnet, dass** der Verbund (21) vor oder nach dem Heißtempern einem Ring-Rolling und/oder MDO-Recken unterzogen wird.

6. Verfahren gemäß mindestens einem der Ansprüche 1 bis 5, **dadurch gekennzeichnet, dass** die Lage (11) eine Folie ist, die vor dem Laminieren einem Ringrolling unterworfen oder gereckt wird.

7. Verbund (21) aus zumindest einem Vlies (10) aus Spinn- oder Stapelfaser auf Basis von Polypropylen, Polyethylen oder Mischungen von Polypropylen und Polyethylen wobei das Vlies (10) ein Flächen-gewicht von maximal 30 g/m² aufweist, und zumindest einer Lage (11) aus einem niedriger schmelzenden Material, welche ein Schrumpfvermögen aufweist, **dadurch gekennzeichnet, dass** das Vlies (11) mit der Lage (10) auf der gesamten Fläche verbunden ist und eine Oberfläche aufweist, welche sich als Schlingenkomponente von Klettverschlussvorrichtungen eignet, indem sie eine direkte Verhakung der männlichen Komponente einer Klettverschlussvorrichtung ermöglicht, wobei der Verbund (21) nach einem Verfahren gemäß einem der Ansprüche 1 bis 6 herstellbar ist.

8. Verbund (21) gemäß Anspruch 7, **dadurch gekennzeichnet, dass** die Lage (11) eine Polyolefinfolie ist.

9. Verbund (21) gemäß Anspruch 8, **dadurch gekennzeichnet, dass** das Polyolefin ein LDPE, LLDPE oder PP und insbesondere eine Mischung aus LDPE und LLDPE, oder eine Mischung aus LDPE oder LLDPE und PP oder eine Mischung aus PE oder PP verschiedener Schmelzpunkte ist.

10. Verbund (21) gemäß Anspruch 8 oder 9, **dadurch gekennzeichnet, dass** die Folie (11) und/oder das Vlies (10) übliche Zusatzstoffe und/oder Verarbeitungshilfsmittel enthalten.

11. Verbund (21) gemäß einem der Ansprüche 7 bis 10, **dadurch gekennzeichnet, dass** die gemäß Beispiel bestimmte Hakenscherkraft mindestens 6 N/cm, vorzugsweise mindestens 8 N/cm und insbesondere mindestens 10 N/cm beträgt.

12. Verbund (21) gemäß einem der Ansprüche 7 bis 11, **dadurch gekennzeichnet, dass** das Vlies (10) ein Spinnvlies mit einem Thermobonding im Rautenmuster ist.

13. Verbund (21) gemäß einem der Ansprüche 7 bis 12, **dadurch gekennzeichnet, dass** das Vlies (10) ein Flächengewicht von 15 bis 25 g/m² hat.

14. Verbund (21) gemäß einem der Ansprüche 7 bis 13, **dadurch gekennzeichnet, dass** der Verbund (21) eine ein- oder mehrlagige Folie (11) und ein ein- oder mehrlagiges Vlies (10) umfasst.

15. Verbund (21) gemäß einem der Ansprüche 7 bis 13, **dadurch gekennzeichnet, dass** der Verbund (21) eine ein- oder mehrlagige Folie (11) und zwei jeweils ein- oder mehrlagige Vliese (10) umfasst.

16. Verwendung eines Verbundes (21) gemäß einem der Ansprüche 7 bis 15 als Außenlage eines absorbierenden Einwegartikels, insbesondere als Backsheet einer Windel.

17. Verwendung eines Verbundes (21) gemäß einem der Ansprüche 7 bis 15 als Schlingenkomponente einer Klettverschlussvorrichtung an absorbierenden Einwegartikeln oder Bekleidung.

## Claims

1. A method for producing composites (21) with a surface, that is suitable as loop component of hook-and-loop fastening devices, in that it enables a direct hooking of the male component of a hook-and-loop fastening device, from a non-woven fabric (10) having a grammage of maximally 30 g/m² and at least one further layer (11), wherein the further layer (11) has a lower melting temperature than the non-woven fabric (10) and the layer (11) has a shrinking ability, wherein the non-woven fabric (10) is laminated with the layer (11), **characterized in that** the non-woven fabric (10) is laminated to the layer (11) across the entire surface, wherein the composite (21) is subjected to a hot-annealing, by heating the composite (21) to a temperature above the melting point of the layer (11), shrinking it by 1 to 10%, so that the non-woven fabric (10) increases in height by reducing the dimensions in the surface and the composite (21) is cooled to temperatures below the melting point of the layer (11).

2. The method according to claim 1, **characterized in that** the cooling is carried out by means of chill rolls (15, 16), the peripheral speed of which is adjusted to be slower than that of the heated rolled (14) by the extent that the composite (21) is to shrink.

3. The method according to claim 1 or 2, **characterized in that** the non-woven fabric (10) is laminated to the further layer (11) by means of adhesive lamination or thermal lamination.

4. The method according to any one of claims 1 to 3, **characterized in that** the shrinkage is set to 2 to 5%.

5. The method according to any one of claims 1 to 4, **characterized in that** the composite (21) is subjected to a ringrolling and/or MDO stretching prior to or after the hot-annealing.

6. The method according to at least any one of claims 1 to 5, **characterized in that** the layer (11) is a film, which is subjected to a ringrolling or is stretched prior to the laminating.

7. A composite (21) of at least one non-woven fabric (10) of a spunbonded or stapling fibre based on a polypropylene, polyethylene or mixtures of polypropylene and polyethylene, wherein the non-woven fabric (10) has a grammage of maximally 30 g/m², and of at least one layer (11) of a lower-melting material, which has a shrinking ability, **characterized in that** the non-woven fabric (11) is laminated to the layer (10) across the entire surface and has a surface, which is suitable as loop component of hook-and-loop fastening devices, **in that** it enables a direct hooking of the male component of a hook-and-loop fastening device, wherein the composite (21) can be obtained according to a method according to any one of claims 1 to 6.

8. The composite (21) according to claim 7, **characterized in that** the layer (11) is a polyolefin film.

9. The composite (21) according to claim 8, **characterized in that** the polyolefin is a LDPE, LLDPE or PP and in particular a mixture of LDPE and LLDPE, or a mixture of LDPE or LLDPE and PP or a mixture of PE and PP having different melting points.

10. The composite (21) according to claim 8 or 9, **characterized in that** the film (11) and/or the non-woven fabric (10) comprise common additives and/or processing aids.

11. The composite (21) according to any one of claims 7 to 10, **characterized in that** the hook shear force determined according to the example is at least 6 N/cm, preferably at least 8 N/cm and in particular at least 10 N/cm.

12. The composite (21) according to any one of claims 7 to 11, **characterized in that** the non-woven fabric (10) is a spunbonded fabric comprising a thermal bonding in diamond pattern.

13. The composite (21) according to any one of claims 7 to 12, **characterized in that** the non-woven fabric (10) has a grammage 15 to 25 g/m².

14. The composite (21) according to any one of claims 7 to 13, **characterized in that** the composite (21) comprises a one-layer or multi-layer film (11) and a one-layer or multi-layer non-woven fabric (10).

15. The composite (21) according to any one of claims 7 to 13, **characterized in that** the composite (21) comprises a one-layer or multi-layer film (11) and two non-woven fabrics (10) which are each a one-layer or multi-layer non-woven fabric.

16. A use of a composite (21) according to any one of claims 7 to 15 as outer layer of an absorbent disposable article, in particular as backsheet for a diaper.

17. The use of a composite (21) according to any one of claims 7 to 15 as loop component for a hook-and-loop fastening device on absorbent disposable articles or clothing.

## Revendications

1. Procédé pour la fabrication de composites (21) comprenant une surface qui est appropriée comme composant en forme de boucle de dispositifs de fermeture Velcro, par le fait qu'elle permet un ancrage direct du composant mâle d'un dispositif de fermeture Velcro, réalisés à partir d'un non-tissé (10) dont le poids surfacique maximal s'élève à 30 g/m², et à partir d'au moins une couche supplémentaire (11), la couche supplémentaire (11) présentant une température de fusion inférieure à celle du non-tissé (10) et possédant un pouvoir de retrait, le non-tissé (10) étant stratifié avec la couche (11), **caractérisé en ce que** le non-tissé (10) est relié à la couche (11) sur toute sa surface, le non-tissé (21) étant soumis à un traitement thermique en chauffant le composite (21) à une température supérieure au point de fusion de la couche (11), en la soumettant à un retrait à concurrence de 1 à 10 % de telle sorte que le non-tissé (10) augmente en hauteur par la diminution de la dimension surfacique et en refroidissant le composite (21) à des températures inférieures au point de fusion de la couche (11).

2. Procédé selon la revendication 1, **caractérisé en ce que** le refroidissement a lieu au moyen de cylindres de refroidissement (15, 16) dont la réduction de la vitesse périphérique par rapport à celle des cylindres de chauffage (14) est proportionnelle au retrait du composite (21) que l'on souhaite obtenir.

3. Procédé selon la revendication 1 ou 2, **caractérisé en ce qu'**on stratifie le non-tissé (10) avec la couche supplémentaire (11) au moyen d'une stratification par collage ou d'une stratification par voie thermique.

4. Procédé selon l'une quelconque des revendications 1 à 3, **caractérisé en ce qu'**on règle le retrait à une valeur de 2 à 5 %.

5. Procédé selon l'une quelconque des revendications 1 à 4, **caractérisé en ce qu'**on soumet le composite (21) avant ou après le traitement thermique à un laminage circulaire et/ou à un étirage monoaxial.

6. Procédé selon l'une quelconque des revendications 1 à 5, **caractérisé en ce que** la couche (11) représente un film qui est soumis à un laminage circulaire ou à un étirage avant la stratification.

7. Composite (21) réalisé à partir d'au moins un non-tissé (10) en fibres à tisser ou en fibres découpées à base de polypropylène, de polyéthylène ou de mélanges de polypropylène et de polyéthylène, le non-tissé (10) présentant un poids surfacique maximal de 30 g/m², et à partir d'au moins une couche (11) réalisée en un matériau à point de fusion inférieur, qui présente un pouvoir de retrait, **caractérisé en ce que** le non-tissé (11) est relié à la couche (10) sur toute sa surface et présente une surface qui est appropriée comme composant faisant office de boucle de dispositifs de fermeture Velcro, par le fait qu'elle permet un ancrage direct du composant mâle d'un dispositif de fermeture Velcro, le composite (21) pouvant être fabriqué conformément à un procédé selon l'une quelconque des revendications 1 à 6.

8. Composite (21) selon la revendication 7, **caractérisé en ce que** la couche (11) est un film de polyoléfine.

9. Composite (21) selon la revendication 8, **caractérisé en ce que** la polyoléfine représente un LDPE, un LLDPE ou un PP, et en particulier un mélange de LDPE et de LLDPE, ou un mélange de LDPE ou de LLDPE et de PP ou un mélange de PE ou de PP possédant des points de fusion différents.

10. Composite (21) selon la revendication 8 ou 9, **caractérisé en ce que** le film (11) et/ou le non-tissé (10) contiennent des additifs et/ou des adjuvants de traitement habituels.

11. Composite (21) selon l'une quelconque des revendications 7 à 10, **caractérisé en ce que** la résistance au cisaillement déterminée à titre d'exemple s'élève à au moins 6 N/cm, de préférence à au moins 8 N/cm, et en particulier à au moins 10 N/cm.

12. Composite (21) selon l'une quelconque des revendications 7 à 11, **caractérisé en ce que** le non-tissé (10) est un filé-lié comprenant un thermoliage dans le motif en losange.

13. Composite (21) selon l'une quelconque des revendications 7 à 12, **caractérisé en ce que** le non-tissé (10) possède un poids surfacique de 15 à 25 g/m².

14. Composite (21) selon l'une quelconque des revendications 7 à 13, **caractérisé en ce que** le composite (21) comprend un film monocouche ou multicouche (11) et un non-tissé monocouche ou multicouche (10).

15. Composite (21) selon l'une quelconque des revendications 7 à 13, **caractérisé en ce que** le composite (21) comprend un film monocouche ou multicouche (11) et deux non-tissés respectivement monocouche ou multicouche (10).

16. Utilisation d'un composite (21) selon l'une quelconque des revendications 7 à 15 à titre de couche externe d'un article absorbant à jeter, en particulier à titre de feuille dorsale d'un lange.

17. Utilisation d'un composite (21) selon l'une quelconque des revendications 7 à 15 à titre de composant en forme de boucle d'un dispositif de fermeture Velcro à des articles absorbant à jeter ou à un vêtement.
